# EUROPEAN PATENT APPLICATION

(11) **EP 4 600 894 A1**
(43) Date of publication of application: **13.08.2025**
(21) Application number: 22962960.5
(22) Date of filing: 24.10.2022
(51) Int. Cl.: G06T 5/00, G06T 7/00, G06V 10/82

(54) **DATA PROCESSING METHOD AND APPARATUS, AND INTELLIGENT DRIVING DEVICE**

(71) Applicant: Shenzhen Yinwang Intelligent Technologies Co., Ltd., Shenzhen, Guangdong 518129 (CN)
(72) Inventor: YANG, Zhixiong, Shenzhen, Guangdong 518129 (CN); HUANG, Qingqiu, Shenzhen, Guangdong 518129 (CN); ZHU, Xinge, Shenzhen, Guangdong 518129 (CN); TONG, Juanjuan, Shenzhen, Guangdong 518129 (CN); LI, Mengjie, Shenzhen, Guangdong 518129 (CN)
(74) Representative: Maiwald GmbH
(86) International application number: PCT/CN2022/127041
(87) International publication number: WO 2024/086972

(57) **Abstract**

Embodiments of this application provide a data processing method and apparatus, and an intelligent driving device. The method includes: obtaining point cloud data; mapping a point in the point cloud data from a three-dimensional spatial coordinate system to a two-dimensional grid coordinate system, to obtain grid data, where the grid data includes a measurement value of the point; determining a type of the point based on the grid data, where the type of the point includes a noise point or a non-noise point; and denoising the point cloud data based on the type of the point. Embodiments of this application may be applied to an intelligent vehicle or an electric vehicle, and there is no need for a large amount of random access in a processing process of point cloud data, helping improve data processing efficiency.

## Description

### TECHNICAL FIELD

Embodiments of this application relate to the field of intelligent driving, and more specifically, to a data processing method and apparatus, and an intelligent driving device.

### BACKGROUND

A vehicle-mounted lidar can quickly and accurately obtain three-dimensional spatial information of a surrounding environment of a vehicle. Currently, the vehicle-mounted lidar is widely used in fields such as surveying and mapping, self-driving, and intelligent transportation. A laser point cloud is a form in which the vehicle-mounted lidar stores data. Because the vehicle-mounted lidar indiscriminately scans the environment in a working process, the laser point cloud includes information about a vehicle, the ground, a pedestrian, a road structure, and the like. In addition, the laser point cloud also includes some noise. Presence of the noise affects a subsequent processing task for the laser point cloud. If a final output result deviates, safety of the vehicle is affected.

Therefore, how to effectively remove the noise from the laser point cloud becomes an urgent problem to be resolved.

### SUMMARY

Embodiments of this application provide a data processing method and apparatus, and an intelligent driving device, to effectively remove noise from point cloud data, and help improve safety of the intelligent driving device.

The intelligent driving device in this application may include a road transportation means, a water transportation means, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving device may be a transportation means like an aircraft or a ship.

According to a first aspect, a data processing method is provided. The method includes: obtaining point cloud data; mapping a point in the point cloud data from a three-dimensional spatial coordinate system to a two-dimensional grid coordinate system, to obtain grid data, where the grid data includes a measurement value of the point; determining a type of the point based on the grid data, where the type of the point includes a noise point or a non-noise point; and denoising the point cloud data based on the type of the point.

Distribution of the point cloud data in the three-dimensional spatial coordinate system is sparse and uneven. Therefore, in this embodiment of this application, the point in the point cloud data is mapped from the three-dimensional spatial coordinate system to the two-dimensional grid coordinate system, so that the mapped grid data in the two-dimensional grid coordinate system can be stored in a specific order. In this way, there is no need for a large amount of random access in a data processing process, helping improve data processing efficiency. In addition, compared with voxel-based sampling in the three-dimensional spatial coordinate system, this mapping manner can ensure that the information is not lost.

In some possible implementations, the obtaining point cloud data includes: obtaining point cloud data collected by a lidar.

In some possible implementations, the measurement value of the point in the point cloud data includes but is not limited to one or more of the following: a distance, a reflected light intensity, and an ambient light intensity.

In some possible implementations, the three-dimensional spatial coordinate system includes a Cartesian coordinate system or a three-dimensional polar coordinate system.

In some possible implementations, the two-dimensional grid coordinate system includes an image coordinate system or a two-dimensional polar coordinate system.

With reference to the first aspect, in some implementations of the first aspect, the mapping a point in the point cloud data from a three-dimensional spatial coordinate system to a two-dimensional grid coordinate system, to obtain grid data includes: mapping the point from the three-dimensional spatial coordinate system to the two-dimensional grid coordinate system based on a yaw angle and a pitch angle of the point, to obtain the grid data.

In this embodiment of this application, the point may be mapped from the three-dimensional spatial coordinate system to the two-dimensional grid coordinate system by using the yaw angle and the pitch angle of the point in the point cloud data, so that the mapped grid data in the two-dimensional grid coordinate system is stored in a specific order. In this way, there is no need for a large amount of random access in a data processing process, helping improve data processing efficiency. In addition, compared with voxel-based sampling in the three-dimensional spatial coordinate system, this mapping manner can ensure that the information is not lost.

With reference to the first aspect, in some implementations of the first aspect, the method further includes: determining the yaw angle and the pitch angle of the point based on coordinates of the point.

In this embodiment of this application, in a process of mapping the point in the point cloud data from the three-dimensional spatial coordinate system to the two-dimensional grid coordinate system, the yaw angle and the pitch angle of the point may be obtained through calculation based on the coordinates of the point. Therefore, the point may be mapped from the three-dimensional spatial coordinate system to the two-dimensional grid coordinate system based on the yaw angle and the pitch angle.

With reference to the first aspect, in some implementations of the first aspect, the determining a type of the point based on the grid data includes: inputting the grid data into a prediction model to obtain the type of the point, where the prediction model is obtained through training by using training data, the training data includes another piece of grid data, and the another piece of grid data includes a measurement value of a noise point in another piece of point cloud data and a measurement value of a non-noise point in the another piece of point cloud data.

For example, the two-dimensional grid coordinate system is an image coordinate system (the grid data is image data). Because an image processing algorithm (for example, a machine learning method or a neural network model) is already very mature, the image data may be processed by using the image processing algorithm, to determine whether a point corresponding to each pixel is a noise point, helping improve efficiency of identifying a noise point in the point cloud data. In addition, because an intelligent driving device can quickly identify the noise point in the point cloud data, this helps improve safety of the intelligent driving device.

With reference to the first aspect, in some implementations of the first aspect, the type of the point includes one or more of the following: a rain noise point, a dust noise point, a ghost noise point, a point corresponding to a vehicle, a point corresponding to a pedestrian, and a point corresponding to a road surface.

In this embodiment of this application, the grid data is input into the prediction model, and an output result of the prediction model may include different types of points. In this way, the intelligent driving device may perform processing based on the different types of points. This helps improve flexibility and efficiency of the intelligent driving device in denoising a point cloud. For example, in a rainy day scenario, in consideration of significant impact of a rain noise point on a radar, when the identified point includes a rain noise point and another type of noise point, the rain noise point may be preferentially processed.

With reference to the first aspect, in some implementations of the first aspect, the determining a type of the point based on the grid data includes: clustering the grid data to obtain a plurality of data blocks; and determining the type of the point based on a measurement value of a point corresponding to each of the plurality of data blocks and a measurement value of a point corresponding to a data block around each data block.

In this embodiment of this application, the grid data may be clustered to obtain the plurality of data blocks, and the type of the point corresponding to each data block may be determined based on the measurement value of each data block and the measurement value of the data block around each data block. This can improve efficiency of identifying the type of the point in the point cloud data.

In some possible implementations, the grid data may be clustered based on k-means clustering or mean-shift clustering, to divide the grid data into the plurality of data blocks.

With reference to the first aspect, in some implementations of the first aspect, the determining the type of the point based on a measurement value of a point corresponding to each of the plurality of data blocks and a measurement value of a point corresponding to a data block around each data block includes: when a difference between an average value of distances of points corresponding to a first data block and an average value of distances of points corresponding to a second data block is greater than or equal to a preset distance threshold, determining that the point corresponding to the first data block is a noise point; and/or when a difference between an average value of reflected light intensities of the points corresponding to the first data block and an average value of reflected light intensities of the points corresponding to the second data block is greater than or equal to a preset light intensity threshold, determining that the point corresponding to the first data block is a noise point. The plurality of data blocks include the first data block and the second data block, and the second data block is a data block around the first data block.

In this embodiment of this application, the noise point in the point cloud data is identified by using a morphology difference between the point cloud data of different dimensions (for example, coordinates, a distance, and a reflected light intensity). This helps improve accuracy of noise point identification, and helps improve safety of the intelligent driving device.

The technical solution in this embodiment of this application may be applied to single-frame point cloud data of a single radar, or may be applied to a multi-radar scenario. In a multi-radar scenario, point cloud data of each radar may be first processed, and is then spliced.

In some possible implementations, the intelligent driving device includes a first radar and a second radar. Point cloud data collected by the first radar is first point cloud data, and point cloud data collected by the second radar is second point cloud data. When the first point cloud data and the second point cloud data need to be spliced, both the first point cloud data and the second point cloud data may be first denoised according to the data processing method provided in this embodiment of this application. Then, the first point cloud data and the second point cloud data that are denoised may be spliced.

According to a second aspect, a data processing apparatus is provided. The apparatus includes: an obtaining unit, configured to obtain point cloud data; a data mapping unit, configured to map a point in the point cloud data from a three-dimensional spatial coordinate system to a two-dimensional grid coordinate system, to obtain grid data, where the grid data includes a measurement value of the point; a determining unit, configured to determine a type of the point based on the grid data, where the type of the point includes a noise point or a non-noise point; and a denoising unit, configured to denoise the point cloud data based on the type of the point.

With reference to the second aspect, in some implementations of the second aspect, the data mapping unit is configured to map the point from the three-dimensional spatial coordinate system to the two-dimensional grid coordinate system based on a yaw angle and a pitch angle of the point, to obtain the grid data.

With reference to the second aspect, in some implementations of the second aspect, the determining unit is further configured to determine the yaw angle and the pitch angle of the point based on coordinates of the point.

With reference to the second aspect, in some implementations of the second aspect, the determining unit is configured to input the grid data into a prediction model to obtain the type of the point, where the prediction model is obtained through training by using training data, the training data includes another piece of grid data, and the another piece of grid data includes a measurement value of a noise point in another piece of point cloud data and a measurement value of a non-noise point in the another piece of point cloud data.

With reference to the second aspect, in some implementations of the second aspect, the type of the point includes one or more of the following: a rain noise point, a dust noise point, a ghost noise point, a point corresponding to a vehicle, a point corresponding to a pedestrian, and a point corresponding to a road surface.

With reference to the second aspect, in some implementations of the second aspect, the determining unit is configured to: cluster the grid data to obtain a plurality of data blocks; and determine the type of the point based on a measurement value of a point corresponding to each of the plurality of data blocks and a measurement value of a point corresponding to a data block around each data block.

With reference to the second aspect, in some implementations of the second aspect, the determining unit is configured to: when a difference between an average value of distances of points corresponding to a first data block and an average value of distances of points corresponding to a second data block is greater than or equal to a preset distance threshold, determine that the point corresponding to the first data block is a noise point; and/or when a difference between an average value of reflected light intensities of the points corresponding to the first data block and an average value of reflected light intensities of the points corresponding to the second data block is greater than or equal to a preset light intensity threshold, determine that the point corresponding to the first data block is a noise point. The plurality of data blocks include the first data block and the second data block, and the second data block is a data block around the first data block.

According to a third aspect, a data processing apparatus is provided. The apparatus includes a processing unit and a storage unit. The storage unit is configured to store instructions, and the processing unit executes the instructions stored in the storage unit, so that the apparatus performs the method according to any one of the possible implementations of the first aspect.

According to a fourth aspect, a data processing system is provided. The system includes a radar and a computing platform, and the computing platform includes the apparatus according to any one of the possible implementations of the second aspect or the third aspect.

According to a fifth aspect, an intelligent driving device is provided. The intelligent driving device includes the apparatus according to any one of the possible implementations of the second aspect or the third aspect, or includes the system in the fourth aspect.

In some possible implementations, the intelligent driving device is a vehicle.

According to a sixth aspect, a computer program product is provided. The computer program product includes computer program code. When the computer program code is run on a computer, the computer is enabled to perform the method according to any one of the possible implementations of the first aspect.

It should be noted that all or some of the computer program code may be stored in a first storage medium. The first storage medium may be packaged together with a processor, or may be packaged separately from a processor. This is not specifically limited in embodiments of this application.

According to a seventh aspect, a computer-readable medium is provided. The computer-readable medium stores program code. When the computer program code is run on a computer, the computer is enabled to perform the method according to any one of the possible implementations of the first aspect.

According to an eighth aspect, an embodiment of this application provides a chip system. The chip system includes a processor, configured to invoke a computer program or computer instructions stored in a memory, to enable the processor to perform the method according to any one of the possible implementations of the first aspect.

With reference to the eighth aspect, in a possible implementation, the processor is coupled to the memory through an interface.

With reference to the eighth aspect, in a possible implementation, the chip system further includes the memory. The memory stores the computer program or computer instructions.

### BRIEF DESCRIPTION OF DRAWINGS

FIG. 1 is a functional block diagram of an intelligent driving device according to an embodiment of this application;
FIG. 2 is a block diagram of a system according to an embodiment of this application;
FIG. 3 is a diagram of a scanning manner of a vehicle-mounted lidar according to an embodiment of this application;
FIG. 4 is a schematic flowchart of a data processing method according to an embodiment of this application;
FIG. 5 is a diagram of mapping points in point cloud data from a three-dimensional spatial coordinate system to a two-dimensional grid coordinate system according to an embodiment of this application;
FIG. 6 is another diagram of mapping points in point cloud data from a three-dimensional spatial coordinate system to a two-dimensional grid coordinate system according to an embodiment of this application;
FIG. 7 is a diagram of a multi-channel image formed by placing measurement values of different dimensions in different channels of an image according to an embodiment of this application;
FIG. 8 is a morphology difference between point cloud in information channels of different dimensions according to an embodiment of this application;
FIG. 9 is a diagram of performing prediction through a neural network according to an embodiment of this application;
FIG. 10 is a diagram of removing a noise point cloud according to an embodiment of this application;
FIG. 11 is another diagram of performing prediction through a neural network according to an embodiment of this application;
FIG. 12 is a diagram of identifying noise data through clustering and according to a noise semantic rule according to an embodiment of this application;
FIG. 13 is a diagram of identifying noise data by integrating different semantic segmentation models according to an embodiment of this application;
FIG. 14 is a block diagram of a data processing apparatus according to an embodiment of this application; and
FIG. 15 is a block diagram of a system according to an embodiment of this application.

### DESCRIPTION OF EMBODIMENTS

In the descriptions of embodiments of this application, unless otherwise specified, "/" means "or". For example, A/B may represent A or B. In this specification, "and/or" describes only an association relationship between associated objects and represents that three relationships may exist. For example, A and/or B may represent the following three cases: Only A exists, both A and B exist, and only B exists.

Prefix words "first", "second", and the like in embodiments of this application are merely intended to distinguish between different objects, and impose no limitation on locations, sequences, priorities, quantities, content, or the like of the described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation. In the descriptions of embodiments, unless otherwise specified, "a plurality of" means two or more.

As described above, a vehicle-mounted lidar can quickly and accurately obtain three-dimensional spatial information of a surrounding environment of a vehicle. Currently, the vehicle-mounted lidar is widely used in fields such as surveying and mapping, self-driving, and intelligent transportation. A laser point cloud is a form in which the vehicle-mounted lidar stores data. Because the vehicle-mounted lidar indiscriminately scans the environment in a working process, the laser point cloud includes a series of information about a vehicle, the ground, a pedestrian, a road structure, and the like. In addition, the laser point cloud also includes some noise. Presence of the noise affects a subsequent processing task for the laser point cloud. A final output result deviates, and safety of the vehicle is affected.

For the foregoing denoising problem of the in-vehicle laser point cloud, a current denoising method is processing three-dimensional point cloud data through statistical fitting or filtering. However, the current existing point cloud denoising method has the following disadvantages:
(1) An existing algorithm directly accesses raw point cloud data, resulting in low reading and computing efficiency. The raw point cloud data of the vehicle-mounted lidar is stored in an unordered manner. If the algorithm is directly applied to the unordered raw data, there is a need for a large amount of random memory access, and reading efficiency is low. Similarly, it is difficult to directly use a mature algorithm to extract a data feature from the data stored in an unordered manner, resulting in low computing efficiency.
(2) The algorithm depends on voxel-based sampling, which involves high computing overheads and high memory usage, and lacks precision. Some information is lost in a voxelization process, and a degree of information loss is related to selected resolution. Finer voxelization resolution indicates that less point cloud information is lost. The memory usage and the resolution are almost in a cubic relationship. The memory usage cubically increases with the voxelization resolution. Point cloud information loss and the memory usage cannot be both considered. Due to sparse and uneven distribution of points in the raw point cloud data, a lot of meaningless computing overheads exist in the voxelization process, and overall computing efficiency is low.

Embodiments of this application provide a data processing method and apparatus, and an intelligent driving device, to map a point in point cloud data from a three-dimensional spatial coordinate system to a two-dimensional grid coordinate system to obtain grid data, process the grid data, and map a processing result (for example, a type of the point in the point cloud data) back to the original three-dimensional spatial coordinate system. In this way, the type of the point in the point cloud data in the three-dimensional spatial coordinate system can be quickly obtained. In this case, the point cloud data may be denoised based on the type of the point in the point cloud data in the three-dimensional spatial coordinate system. This helps improve efficiency of removing a noise point in the point cloud data, and helps improve safety of the intelligent driving device.

The following describes the technical solutions in embodiments of this application with reference to the accompanying drawings in embodiments of this application.

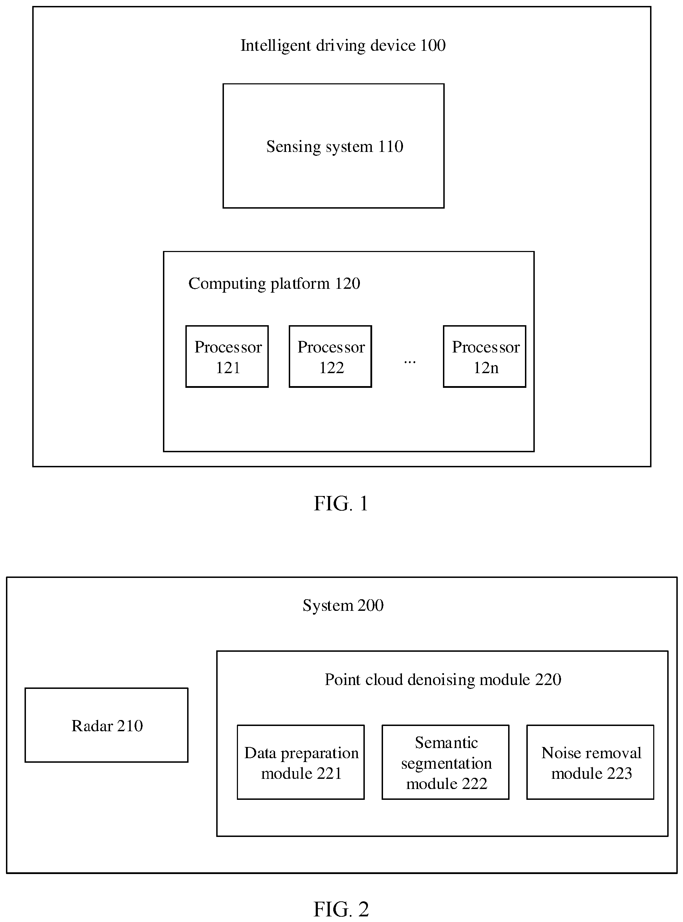

FIG. 1 is a functional block diagram of an intelligent driving device 100 according to an embodiment of this application. The intelligent driving device 100 may include a sensing system 110 and a computing platform 120. The sensing system 110 may include one or more sensors that sense information about a surrounding environment of the intelligent driving device 100. For example, the sensing system 110 may include a positioning system. The positioning system may be a global positioning system (global positioning system, GPS), a BeiDou system, or another positioning system. The sensing system 110 may further include one or more of the following: an inertial measurement unit (inertial measurement unit, IMU), a lidar, a millimeter-wave radar, an ultrasonic radar, and a camera apparatus.

Some or all functions of the intelligent driving device 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), like a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions, and some or all of the processors 121 to 12n may invoke the instructions in the memory, to implement a corresponding function.

An intelligent driving device 100 in this application may include a road transportation means, a water transportation means, an air transportation means, an industrial device, an agricultural device, an entertainment device, or the like. For example, the intelligent driving device 100 may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving device 100 may be a transportation means like an aircraft or a ship.

FIG. 2 is a block diagram of a system 200 according to an embodiment of this application. As shown in FIG. 2, the system 200 includes a radar 210 and a point cloud denoising module 220. The point cloud denoising module 220 is configured to: receive point cloud data sent by the radar 210, and denoise the point cloud data. For example, the radar 210 may be a lidar, a millimeter wave radar, or a centimeter wave radar.

The point cloud denoising module 220 may include a data preparation module 221, a semantic segmentation module 222, and a noise removal module 223. The data preparation module 221 may be configured to: establish a mapping relationship between a three-dimensional spatial coordinate system in which the point cloud data is in and a two-dimensional grid coordinate system, and map a point in the point cloud data from the three-dimensional spatial coordinate system to the two-dimensional grid coordinate system based on the mapping relationship. The data preparation module 221 may be further configured to store, based on the mapping relationship, measurement values of the point in the point cloud data of different dimensions in different channels in the two-dimensional grid coordinate system. The semantic segmentation module 222 is configured to: perform semantic segmentation on data in a plurality of channels or input the data in the plurality of channels into a prediction model, to obtain a semantic attribute of each grid, and further obtain a type of a point corresponding to each grid. The noise removal module 223 may denoise the point cloud data in the three-dimensional spatial coordinate system based on the mapping relationship and the type of the point, to obtain denoised point cloud data.

The three-dimensional spatial coordinate system in which the point cloud data is in includes but is not limited to a Cartesian coordinate system, a three-dimensional polar coordinate system, or the like.

The two-dimensional grid coordinate system includes but is not limited to a two-dimensional coordinate system, for example, an image coordinate system and a polar coordinate system.

The radar 210 may be located in the sensing system 110, and the point cloud denoising module 220 may be located in the computing platform 120.

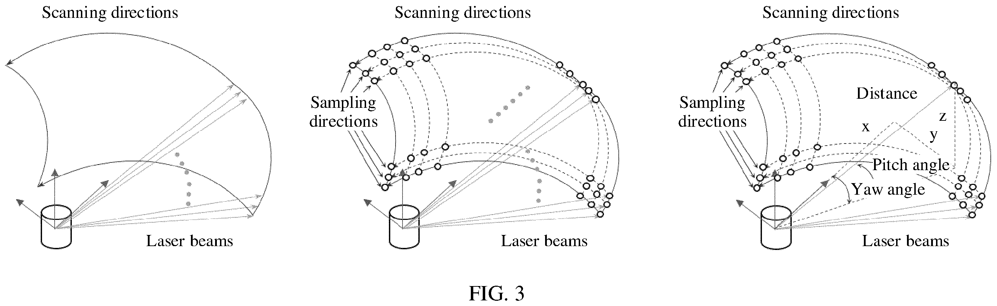

FIG. 3 is a diagram of a scanning manner of a vehicle-mounted lidar according to an embodiment of this application.

As shown in (a) in FIG. 3, the lidar emits several laser beams and performs scanning according to a specific rule.

For example, the lidar may emit several laser beams on a same vertical plane, and an internal apparatus controls the several laser beams to rotate in a horizontal direction, to complete scanning in the horizontal direction; or the lidar may emit several laser beams on a horizontal plane, and an internal apparatus controls the several laser beams to rotate in a vertical direction, to complete scanning in the vertical direction.

As shown in (b) in FIG. 3, because the internal apparatus does not perform continuous sampling, the lidar samples, at scanning angles at a specific spacing, reflected light in directions of the laser beams, and obtains information such as a distance of a sampling point and reflection intensity through measurement.

As shown in (c) in FIG. 3, based on a measured distance and directional angles of a laser beam corresponding to reflected light, Cartesian coordinates (x, y, z) of a reflection point in contact with the laser may be calculated by using a spatial geometry-related formula.

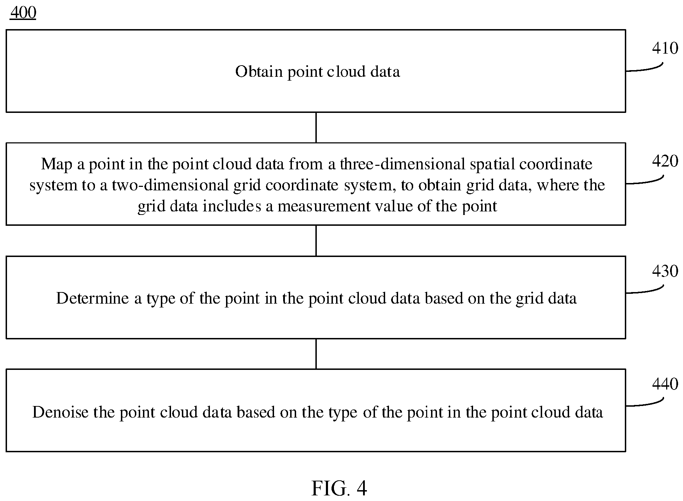

FIG. 4 is a schematic flowchart of a data processing method 400 according to an embodiment of this application. As shown in FIG. 4, the method 400 may be performed by the intelligent driving device 100, the computing platform 120, a system-on-a-chip (system-on-a-chip, SoC) in the computing platform 120, a processor in the computing platform 120, or the point cloud denoising module 220. As shown in FIG. 4, the method 400 includes the following steps.

S410: Obtain point cloud data.

For example, the point cloud denoising module 220 may obtain point cloud data collected by a radar 210.

S420: Map a point in the point cloud data from a three-dimensional spatial coordinate system to a two-dimensional grid coordinate system, to obtain grid data, where the grid data includes a measurement value of the point.

The point in the point cloud data may be a sampling point in the point cloud data.

In an embodiment, the measurement value of the point in the point cloud data includes but is not limited to one or more of the following: a distance, a reflected light intensity, and an ambient light intensity.

In an embodiment, the mapping a point in the point cloud data from a three-dimensional spatial coordinate system to a two-dimensional grid coordinate system, to obtain grid data includes: mapping the point in the point cloud data from the three-dimensional spatial coordinate system to the two-dimensional grid coordinate system based on a pitch angle and a yaw angle of the point in the point cloud data, to obtain the grid data.

For example, the pitch angle and the yaw angle may be a pitch angle and a yaw angle of each point that are recorded when a lidar emits a laser beam.

In an embodiment, before the mapping the point in the point cloud data from the three-dimensional spatial coordinate system to the two-dimensional grid coordinate system based on a pitch angle and a yaw angle of the point in the point cloud data, the method 400 further includes: determining the pitch angle and the yaw angle of the point based on coordinates of the point in the point cloud data.

For example, the pitch angle and the yaw angle of the point may not be recorded when the lidar emits the laser beam, but are determined based on the coordinates of the point after the coordinates of the point are obtained through measurement.

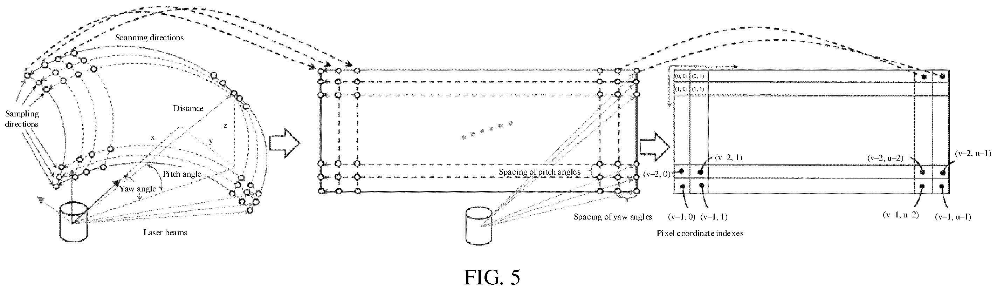

For example, FIG. 5 is a diagram of mapping points in point cloud data from a three-dimensional spatial coordinate system to a two-dimensional grid coordinate system. Vertical distribution of the points in the point cloud data may be considered as sampling points of pitch angles, and horizontal distribution of the points in the point cloud data may be considered as sampling points of yaw angles. The points may be placed in the two-dimensional grid coordinate system based on values of pitch angles and yaw angles of the points in the point cloud data. A horizontal spacing of the points in the two-dimensional grid coordinate system is a spacing of the yaw angles. A vertical spacing of the points in the two-dimensional grid coordinate system is a spacing of the pitch angles. Results obtained by dividing the yaw angles of the points by the spacing of the yaw angles are rounded, and then a smallest rounded value among all the points is subtracted from the rounded results to obtain integer indexes starting from 0. The indexes may be used as horizontal coordinates of the points in the two-dimensional grid coordinate system. Results obtained by dividing the pitch angles of the points by the spacing of the pitch angles are rounded, and then a smallest rounded value among all the points is subtracted from the rounded results to obtain integer indexes starting from 0. The indexes may be used as vertical coordinates of the points in the two-dimensional grid coordinate system. In this way, a mapping relationship between the three-dimensional spatial coordinate system for the point cloud data and the two-dimensional grid coordinate system is established.

In contrast to directly accessing the raw point cloud data, which results in a large amount of random memory access, in embodiments of this application, the points in the point cloud data are sorted in a specific direction, and sorted data can be sequentially accessed, improving data access efficiency. In addition, after coordinate system transformation is performed on the points in the raw point cloud data, original sparse and uneven distribution in the three-dimensional spatial coordinate system is changed into dense and even distribution in the two-dimensional grid coordinate system. A new data form also reduces a calculation amount in a subsequent processing process.

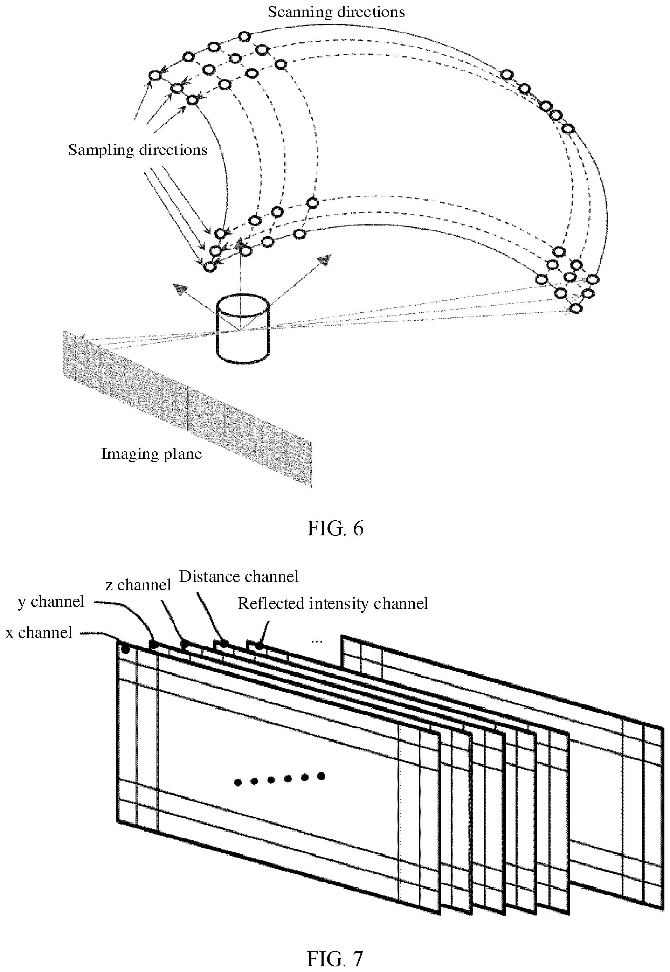

For example, FIG. 6 is another diagram of mapping points in point cloud data from a three-dimensional spatial coordinate system to a two-dimensional grid coordinate system.

An imaging plane divided into grids may be positioned in a direction opposite to a direction in which the radar emits a laser. The grids on the imaging plane each are indexed horizontally and vertically by a group of u and v values. A distance between the imaging plane and an origin of the three-dimensional spatial coordinate system and a size of the grids may be determined based on a spacing of sampling angles of the radar. A one-to-one mapping relationship between the points and the grids can be established by ensuring that directions opposite to directions in which laser beams are emitted can exactly pass through different grids on the imaging plane. For example, the imaging plane is considered as an image, and u and v are pixel coordinates of the image. In this case, the pixel coordinates can be used to index the point in the point cloud data.

The imaging plane may also be understood as the two-dimensional grid coordinate system.

S430: Determine a type of the point in the point cloud data based on the grid data.

For example, the two-dimensional grid coordinate system is an image coordinate system. FIG. 7 is a diagram of a multi-channel image formed by placing measurement values of different dimensions in different channels of an image according to an embodiment of this application. It can be learned that the measurement values of the different dimensions include an x coordinate, a y coordinate, a z coordinate, a distance, and a reflected light intensity of the point cloud. The x coordinate, the y coordinate, the z coordinate, the distance, and the reflected light intensity may be placed in the different channels of the image respectively, to form the multi-channel image.

In contrast to using only location information (or distance information) of the point for denoising, in this embodiment of this application, the measurement values of the plurality of dimensions are organically organized together in a same order, and the measurement values of the different dimensions in the point cloud data can be fully used in a subsequent data processing process.

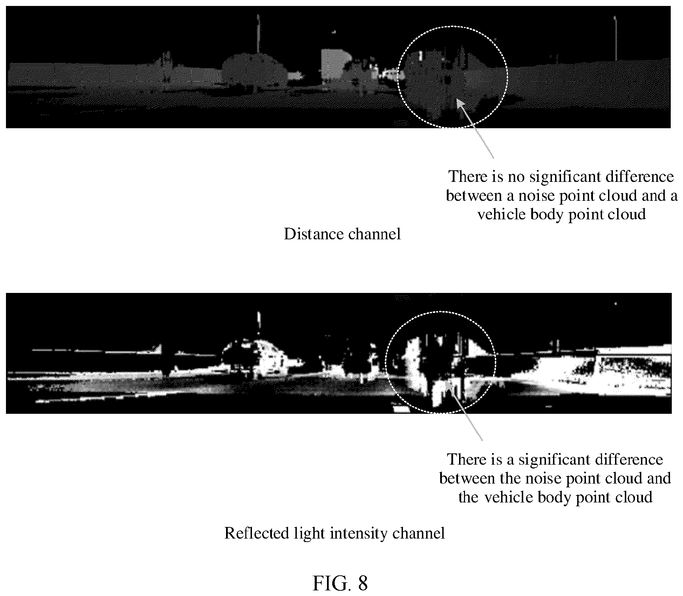

FIG. 8 is a morphology difference between point cloud in information channels of different dimensions according to an embodiment of this application. In a scenario in which a vehicle body point cloud is expanded due to rain, there is no significant difference between an expanded noise point cloud and the raw point cloud in a distance channel, but there is a significant feature difference between the expanded noise point cloud and the raw point cloud in a reflected light intensity channel. In this embodiment of this application, information in different channels is combined, to resolve denoising problems in some special scenarios.

The reflected light intensity may be understood as an intensity of reflected light that is received by the radar and that is of laser emitted by the radar. The ambient light intensity may be understood as light that is emitted by another light source in an environment and that directly enters the radar or is refracted/reflected into the radar.

In an embodiment, the determining a type of the point in the point cloud data based on the grid data includes: inputting the grid data into a prediction model to obtain the type of the point in the point cloud data.

In an embodiment, the method further includes: inputting the grid data into the prediction model to obtain a semantic attribute corresponding to a grid in the grid data; and determining, based on the semantic attribute corresponding to the grid, a type of a point corresponding to the grid.

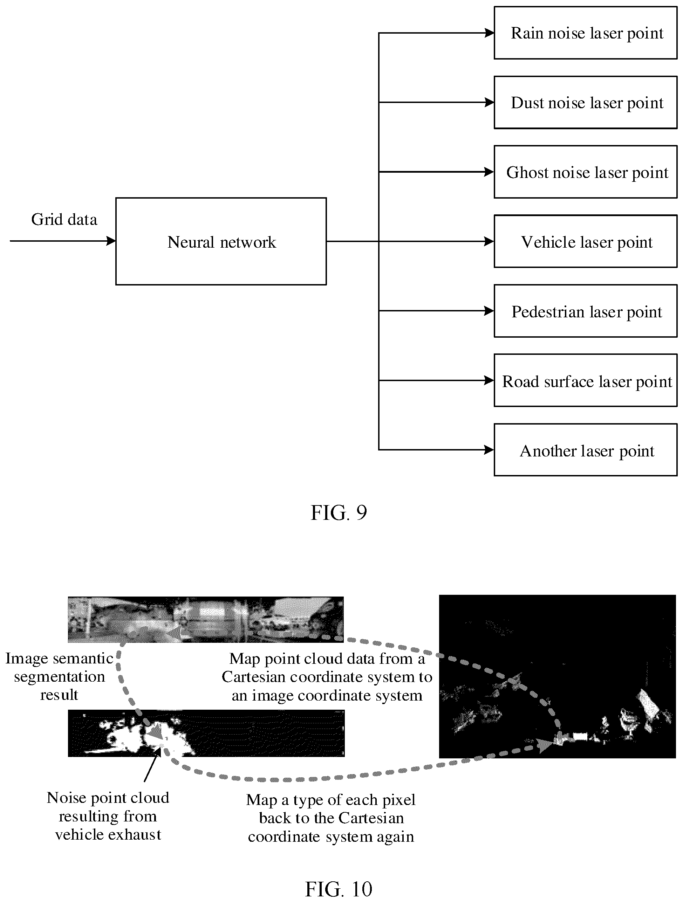

FIG. 9 is a diagram of performing prediction through a neural network according to an embodiment of this application. As shown in FIG. 9, the grid data may be input into the neural network, to obtain the type of the point. For example, the type of the point includes but is not limited to the following: a rain noise point, a dust noise point, a ghost noise point, a point corresponding to a vehicle, a point corresponding to a pedestrian, a point corresponding to a road surface, or another type of point. The neural network herein may be a temporal convolutional network (temporal convolutional network) or the like.

In an embodiment, the neural network may be trained with labeled data. For example, point cloud data collected by the lidar is obtained, and a rain noise laser point, a dust noise laser point, a ghost noise laser point, a vehicle laser point, a pedestrian laser point, and a road surface laser point in the point cloud data are determined. The point cloud data is mapped from the three-dimensional spatial coordinate system to the two-dimensional grid coordinate system, to obtain a training dataset. For example, a data form of the training dataset may be shown in Table 1.

**Table 1 Data form of a training dataset**

| Identifier of a laser point | Distance corresponding to the laser point | Emitted light intensity corresponding to the laser point | Type of the laser point | ... |
|---|---|---|---|---|
| 1 | L₁ | I₁ | Rain noise laser point | ... |
| 2 | L₂ | I₂ | Dust noise laser point | ... |
| 3 | L₃ | I₃ | Ghost noise laser point | ... |
| 4 | L₄ | I₄ | Vehicle laser point | ... |
| 5 | L₅ | I₅ | Pedestrian laser point | ... |
| 6 | L₆ | I₆ | Road surface laser point | ... |
| ... | ... | ... | ... | ... |

The foregoing training dataset may be used as the labeled data. The neural network is trained with the labeled data, so that the neural network can output the type of the laser point (or noise semantics of the laser point).

Table 1 is merely an example, and the data form of the training dataset is not limited in this embodiment of this application. For example, the training dataset may alternatively include other information, such as coordinates and a distance of the laser point.

The noise removal module 223 may store, in the point cloud data based on the mapping relationship between the two-dimensional grid coordinate system and the three-dimensional spatial coordinate system, information that is about the type of the point and that is output by the semantic segmentation module 222. The obtained information about the type of the point is mapped back to the point cloud data in the three-dimensional spatial coordinate system again based on the mapping relationship between the two-dimensional grid coordinate system and the three-dimensional spatial coordinate system, so that the type of the point in the point cloud data can be determined in the three-dimensional spatial coordinate system, and the point cloud data can be denoised according to a requirement of a related task.

FIG. 10 is a diagram of removing a noise point cloud according to an embodiment of this application. For example, as shown in FIG. 10, the three-dimensional spatial coordinate system is a Cartesian coordinate system and the two-dimensional grid coordinate system is an image coordinate system. The data preparation module 221 may map the point in the point cloud data from the Cartesian coordinate system to the image coordinate system. The semantic segmentation module 222 performs semantic segmentation on a two-dimensional point cloud image mapped to the image coordinate system, to obtain a type of each pixel in an image. For example, the image identified by the semantic segmentation module 222 includes a noise point cloud resulting from vehicle exhaust. The noise removal module 223 may map the type of each pixel back to the point cloud data in the Cartesian coordinate system again based on a mapping relationship between the image coordinate system and the Cartesian coordinate system, so that a noise point in the point cloud data can be identified in the Cartesian coordinate system.

A pixel value of each pixel may be obtained by measuring the point in the point cloud data. The pixel value herein is not limited to an integer, and may alternatively be another type of value, for example, a floating-point number or a Boolean value.

In an embodiment, the noise removal module 223 first traverses points in the raw point cloud data, reads Cartesian coordinates (xᵢ, yᵢ, zᵢ) of each point, finds corresponding pixel coordinates (uᵢ, vᵢ) based on the mapping relationship, reads information about a type of a pixel at (uᵢ, vᵢ) (for example, a type of a point corresponding to the pixel), and stores the information in the raw point cloud data in the three-dimensional spatial coordinate system. After semantics of all the points in the point cloud data are read, the point cloud data is denoised according to a requirement of a task.

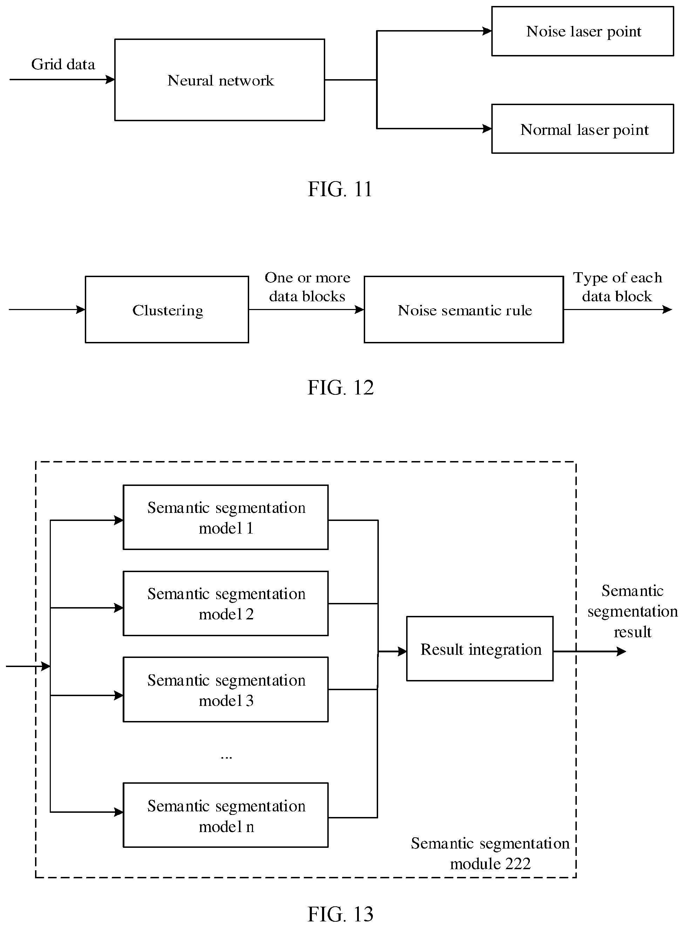

FIG. 11 is a diagram of performing prediction through a neural network according to an embodiment of this application. As shown in FIG. 11, the grid data may be input into the neural network, to obtain the type of the point. For example, the type of the point includes a noise point or a normal point.

In an embodiment, the neural network may be trained with labeled data. For example, point cloud data collected by the lidar is obtained, and a noise laser point (for example, a rain noise laser point, a dust noise laser point, or a ghost noise laser point) and a normal laser point (for example, a vehicle laser point, a pedestrian laser point, and a road surface laser point) in the point cloud data are determined. The point cloud data is mapped from the three-dimensional spatial coordinate system to the two-dimensional grid coordinate system, to obtain a training dataset. For example, Table 2 shows another data form of the training dataset.

**Table 2 Data form of a training dataset**

| Identifier of a laser point | Distance corresponding to the laser point | Emitted light intensity corresponding to the laser point | Type of the laser point | ... |
|---|---|---|---|---|
| 1 | L₁ | I₁ | Noise laser point | ... |
| 2 | L₂ | I₂ | Noise laser point | ... |
| 3 | L₃ | I₃ | Noise laser point | ... |
| 4 | L₄ | I₄ | Normal laser point | ... |
| 5 | L₅ | I₅ | Normal laser point | ... |
| ... | ... | ... | ... | ... |

The foregoing training dataset may be used as the labeled data. The neural network may be trained with the labeled data, so that the neural network can output the type of the laser point (or noise semantics of the laser point).

Table 2 is merely an example, and the data form of the training dataset is not limited in this embodiment of this application. For example, the training dataset may further include other information, such as coordinates and a distance of the laser point.

For a process of determining the type of the point in the three-dimensional spatial coordinate system after determining the type of the point, refer to the description in the foregoing embodiment. Details are not described herein again.

In an embodiment, the determining a type of the point in the point cloud data based on the grid data includes: clustering the grid data to obtain a plurality of data blocks; and determining the type of the point in the point cloud data based on a measurement value of a point corresponding to each of the plurality of data blocks and a measurement value of a point corresponding to a data block around each data block.

FIG. 12 is a diagram of identifying noise data through clustering and according to a noise semantic rule according to an embodiment of this application. As shown in FIG. 12, the semantic segmentation module 222 may cluster the grid data based on k-means clustering or mean-shift clustering, to divide the grid data into the plurality of data blocks.

For example, the plurality of data blocks include a data block 1. If a difference between an average value of distances of points corresponding to the data block 1 and an average value of distances of points corresponding to a data block around the data block 1 is greater than or equal to a preset distance threshold, it may be considered that the point corresponding to the data block 1 is a noise point.

For another example, the plurality of data blocks include a data block 2. If a difference between an average value of reflected light intensities of points corresponding to the data block 2 and an average value of reflected light intensities of points corresponding to a data block around the data block 2 is greater than or equal to a first preset light intensity threshold, it may be considered that the point corresponding to the data block 2 is a noise point.

Alternatively, if the difference between the average value of the reflected light intensity of the point corresponding to the data block 2 and the average value of the reflected light intensity of the point corresponding to the data block around the data block 2 is less than or equal to a second preset light intensity threshold, it may be considered that the point corresponding to the data block 2 is a noise point. The first preset light intensity threshold is greater than the second preset light intensity threshold.

A type of the point corresponding to each data block may be determined according to one noise semantic rule or a plurality of noise semantic rules. For example, if a difference between the average value of the distance of the point corresponding to the data block 1 and the average value of the distance of the point corresponding to the data block around the data block 1 is greater than or equal to the preset distance threshold, and a difference between an average value of reflected light intensities of the points corresponding to the data block 1 and an average value of reflected light intensities of the points corresponding to the data block around the data block 1 is greater than or equal to the first preset light intensity threshold, it may be considered that the point corresponding to the data block 1 is a noise point.

For a process of determining the type of the point in the point cloud data in the three-dimensional spatial coordinate system after determining the type of the point corresponding to the data block, refer to the description in the foregoing embodiment. Details are not described herein again.

FIG. 13 is a diagram of identifying noise data by integrating different semantic segmentation models according to an embodiment of this application. As shown in FIG. 13, the semantic segmentation module 222 may include a semantic segmentation model 1 to a semantic segmentation model n. The semantic segmentation module 222 may separately input data obtained from the data preparation unit 221 into the semantic segmentation model 1 to the semantic segmentation model n, to obtain a semantic segmentation result 1 to a semantic segmentation result n. The semantic segmentation module 222 may determine a final semantic segmentation result based on the result 1 to the result n.

For example, the semantic segmentation model 1 may be the neural network shown in FIG. 11, and the semantic segmentation module 2 may be the semantic segmentation model that performs semantic segmentation through clustering and according to the noise semantic rule shown in FIG. 12. The semantic segmentation module 1 may output a type of a point (for example, a noise point or a normal point). The semantic segmentation module 2 may output a type of a point corresponding to a data block. For example, the data block includes a point 1 and a point 2, and the semantic segmentation module 1 may output a result indicating that a type of the point 1 is a noise point and a type of the point 2 corresponding to a grid 2 is a normal point. The semantic segmentation module 2 may output a result indicating that the points corresponding to the data block are noise points. In this case, the types of the point 1 and the point 2 may be determined based on the result output by the semantic segmentation module 1 and the result output by the semantic segmentation module 2.

For example, different weights may be set for the result output by the semantic segmentation module 1 and the result output by the semantic segmentation module 2. For example, if a weight of the result output by the semantic segmentation module 1 is greater than a weight of the result output by the semantic segmentation module 2, it may be determined that the point 1 is a noise point and the point 2 is a normal point.

S440: Denoise the point cloud data based on the type of the point in the point cloud data.

In an embodiment, all noise points in the point cloud data may be denoised.

In an embodiment, some noise points in the point cloud data may be denoised. For example, a location of a rain noise point, a location of a dust noise point, and a location of a ghost noise point may be determined in S430. If the intelligent driving device is currently greatly affected by rain, the rain noise point in the point cloud data may be denoised, but neither of the dust noise point and the ghost noise point is denoised.

In this embodiment of this application, the point cloud data is arranged in the two-dimensional grid coordinate system in a specific direction, and sorted data may be sequentially accessed, improving memory access efficiency. In addition, after coordinate system transformation is performed on the raw point cloud data, original sparse and uneven distribution in the three-dimensional spatial coordinate system is changed into dense and even distribution in the two-dimensional grid coordinate system. A new data form helps reduce a calculation amount in a subsequent processing process.

An embodiment of this application further provides an apparatus configured to implement any one of the foregoing methods. For example, an apparatus includes units (or means) configured to implement the steps performed by an intelligent driving device or a computing platform in any one of the foregoing methods.

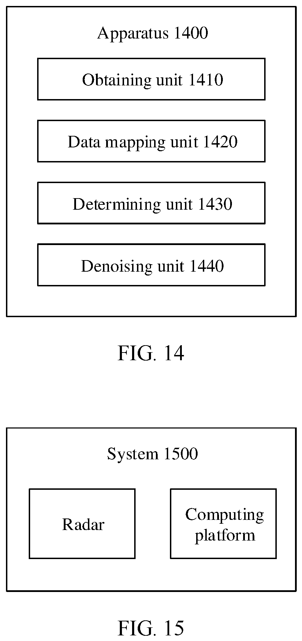

FIG. 14 is a block diagram of a data processing apparatus 1400 according to an embodiment of this application. As shown in FIG. 14, the apparatus 1400 includes: an obtaining unit 1410, configured to obtain point cloud data; a data mapping unit 1420, configured to map a point in the point cloud data from a three-dimensional spatial coordinate system to a two-dimensional grid coordinate system, to obtain grid data, where the grid data includes a measurement value of the point; a determining unit 1430, configured to determine a type of the point based on the grid data, where the type of the point includes a noise point or a non-noise point; and a denoising unit 1440, configured to denoise the point cloud data based on the type of the point.

Optionally, the data mapping unit 1420 is configured to map the point from the three-dimensional spatial coordinate system to the two-dimensional grid coordinate system based on a yaw angle and a pitch angle of the point, to obtain the grid data.

Optionally, the determining unit 1430 is further configured to determine the yaw angle and the pitch angle of the point based on coordinates of the point.

Optionally, the determining unit 1430 is configured to input the grid data into a prediction model to obtain the type of the point, where the prediction model is obtained through training by using training data, the training data includes another piece of grid data, and the another piece of grid data includes a measurement value of a noise point in another piece of point cloud data and a measurement value of a non-noise point in the another piece of point cloud data.

Optionally, the type of the point includes one or more of the following: a rain noise point, a dust noise point, a ghost noise point, a point corresponding to a vehicle, a point corresponding to a pedestrian, and a point corresponding to a road surface.

Optionally, the determining unit 1430 is configured to: cluster the grid data to obtain a plurality of data blocks; and determine the type of the point based on a measurement value of a point corresponding to each of the plurality of data blocks and a measurement value of a point corresponding to a data block around each data block.

Optionally, the determining unit 1430 is configured to: when a difference between an average value of distances of points corresponding to a first data block and an average value of distances of points corresponding to a second data block is greater than or equal to a preset distance threshold, determine that the point corresponding to the first data block is a noise point; and/or when a difference between an average value of reflected light intensities of the points corresponding to the first data block and an average value of reflected light intensities of the points corresponding to the second data block is greater than or equal to a preset light intensity threshold, determine that the point corresponding to the first data block is a noise point. The plurality of data blocks include the first data block and the second data block, and the second data block is a data block around the first data block.

For example, the obtaining unit 1410 may be the computing platform in FIG. 1, or a processing circuit, a processor, or a controller in the computing platform. For example, the obtaining unit 1410 is a processor 121 in the computing platform, and the processor 121 may obtain point cloud data collected by a radar.

For another example, the data mapping unit 1420 may be the computing platform in FIG. 1 or a processing circuit, a processor, or a controller in the computing platform. For example, the data mapping unit 1420 is a processor 122 in the computing platform. The processor 122 may map a point in the point cloud data obtained by the processor 121 from the three-dimensional spatial coordinate system to the two-dimensional grid coordinate system, to obtain the grid data, where the grid data includes a measurement value of the point.

For another example, the determining unit 1430 may be the computing platform in FIG. 1, or a processing circuit, a processor, or a controller in the computing platform. For example, the determining unit 1430 is a processor 123 in the computing platform. The processor 123 may determine the type of the point based on the grid data.

Optionally, functions implemented by the data mapping unit 1420 and the determining unit 1430 may be implemented by a same processor.

For another example, the denoising unit 1440 may be the computing platform in FIG. 1, or a processing circuit, a processor, or a controller in the computing platform. For example, the denoising unit 1440 is a processor 12n in the computing platform. The processor 12n may denoise the point cloud data based on the type of the point determined by the processor 123.

Functions implemented by the obtaining unit 1410, the data mapping unit 1420, the determining unit 1430, and the denoising unit 1440 may be respectively implemented by different processors, or some functions may be implemented by a same processor, or all functions may be implemented by a same processor. This is not limited in embodiments of this application.

It should be understood that division of the units in the foregoing apparatuses is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In a reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, these units are integrated together and implemented in a form of an SOC. The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

Optionally, if the apparatus is located in the vehicle, the processing unit may be the processors 121 to 12n shown in FIG. 1.

FIG. 15 is a block diagram of a data processing system 1500 according to an embodiment of this application. As shown in FIG. 15, the prediction system 1500 includes a radar and a computing platform. The computing platform may include the data processing apparatus 1400.

An embodiment of this application further provides an intelligent driving device. The intelligent driving device may include the data processing apparatus 1400 or the data processing system 1500.

Optionally, the intelligent driving device may be a vehicle.

An embodiment of this application further provides a server. The server may include the data processing apparatus 1400.

An embodiment of this application further provides a computer program product. The computer program product includes computer program code. When the computer program code is run on a computer, the computer is enabled to perform the method.

An embodiment of this application further provides a computer-readable medium. The computer-readable medium stores program code. When the computer program code is run on a computer, the computer is enabled to perform the method.

In an implementation process, steps in the foregoing methods can be implemented by using a hardware integrated logic circuit in the processor, or by using instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one place, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A data processing method, comprising:
obtaining point cloud data;
mapping a point in the point cloud data from a three-dimensional spatial coordinate system to a two-dimensional grid coordinate system, to obtain grid data, wherein the grid data comprises a measurement value of the point;
determining a type of the point based on the grid data, wherein the type of the point comprises a noise point or a non-noise point; and
denoising the point cloud data based on the type of the point.

2. The method according to claim 1, wherein the mapping a point in the point cloud data from a three-dimensional spatial coordinate system to a two-dimensional grid coordinate system, to obtain grid data comprises:
mapping the point from the three-dimensional spatial coordinate system to the two-dimensional grid coordinate system based on a yaw angle and a pitch angle of the point, to obtain the grid data.

3. The method according to claim 2, wherein the method further comprises:
determining the yaw angle and the pitch angle of the point based on coordinates of the point.

4. The method according to any one of claims 1 to 3, wherein the determining a type of the point based on the grid data comprises:
inputting the grid data into a prediction model to obtain the type of the point, wherein
the prediction model is obtained through training with training data, the training data comprises another piece of grid data, and the another piece of grid data comprises a measurement value of a noise point in the another piece of point cloud data and a measurement value of a non-noise point in the another piece of point cloud data.

5. The method according to claim 4, wherein the type of the point comprises one or more of the following: a rain noise point, a dust noise point, a ghost noise point, a point corresponding to a vehicle, a point corresponding to a pedestrian, and a point corresponding to a road surface.

6. The method according to any one of claims 1 to 3, wherein the determining a type of the point based on the grid data comprises:
clustering the grid data to obtain a plurality of data blocks; and
determining the type of the point based on a measurement value of a point corresponding to each of the plurality of data blocks and a measurement value of a point corresponding to a data block around each data block.

7. The method according to claim 6, wherein the determining the type of the point based on a measurement value of a point corresponding to each of the plurality of data blocks and a measurement value of a point corresponding to a data block around each data block comprises:
when a difference between an average value of distances of points corresponding to a first data block and an average value of distances of points corresponding to a second data block is greater than or equal to a preset distance threshold, determining that the point corresponding to the first data block is a noise point; and/or
when a difference between an average value of reflected light intensities of the points corresponding to the first data block and an average value of reflected light intensities of the points corresponding to the second data block is greater than or equal to a preset light intensity threshold, determining that the point corresponding to the first data block is a noise point, wherein
the plurality of data blocks comprise the first data block and the second data block, and the second data block is a data block around the first data block.

8. A data processing apparatus, comprising:
an obtaining unit, configured to obtain point cloud data;
a data mapping unit, configured to map a point in the point cloud data from a three-dimensional spatial coordinate system to a two-dimensional grid coordinate system, to obtain grid data, wherein the grid data comprises a measurement value of the point;
a determining unit, configured to determine a type of the point based on the grid data, wherein the type of the point comprises a noise point or a non-noise point; and
a denoising unit, configured to denoise the point cloud data based on the type of the point.

9. The apparatus according to claim 8, wherein the data mapping unit is configured to:
map the point from the three-dimensional spatial coordinate system to the two-dimensional grid coordinate system based on a yaw angle and a pitch angle of the point, to obtain the grid data.

10. The apparatus according to claim 9, wherein the determining unit is further configured to determine the yaw angle and the pitch angle of the point based on coordinates of the point.

11. The apparatus according to any one of claims 8 to 10, wherein the determining unit is configured to:
input the grid data into a prediction model to obtain the type of the point, wherein
the prediction model is obtained through training with training data, the training data comprises another piece of grid data, and the another piece of grid data comprises a measurement value of a noise point in the another piece of point cloud data and a measurement value of a non-noise point in the another piece of point cloud data.

12. The apparatus according to claim 11, wherein the type of the point comprises one or more of the following: a rain noise point, a dust noise point, a ghost noise point, a point corresponding to a vehicle, a point corresponding to a pedestrian, and a point corresponding to a road surface.

13. The apparatus according to any one of claims 8 to 10, wherein the determining unit is configured to:
cluster the grid data to obtain a plurality of data blocks; and
determine the type of the point based on a measurement value of a point corresponding to each of the plurality of data blocks and a measurement value of a point corresponding to a data block around each data block.

14. The apparatus according to claim 13, wherein the determining unit is configured to:
when a difference between an average value of distances of points corresponding to a first data block and an average value of distances of points corresponding to a second data block is greater than or equal to a preset distance threshold, determine that the point corresponding to the first data block is a noise point; and/or
when a difference between an average value of reflected light intensities of the points corresponding to the first data block and an average value of reflected light intensities of the points corresponding to the second data block is greater than or equal to a preset light intensity threshold, determine that the point corresponding to the first data block is a noise point, wherein
the plurality of data blocks comprise the first data block and the second data block, and the second data block is a data block around the first data block.

15. A data processing apparatus, comprising:
a memory, configured to store a computer program; and
a processor, configured to execute the computer program stored in the memory, to enable the apparatus to perform the method according to any one of claims 1 to 7.

16. A data processing system, comprising a radar and a computing platform, wherein the computing platform comprises the apparatus according to any one of claims 8 to 15.

17. An intelligent driving device, comprising the apparatus according to any one of claims 8 to 15, or comprising the system according to claim 16.

18. The intelligent driving device according to claim 17, wherein the intelligent driving device is a vehicle.

19. A computer-readable storage medium, wherein the computer-readable storage medium stores a computer program, and when the computer program is executed by a computer, the method according to any one of claims 1 to 7 is implemented.

20. A chip, comprising a circuit, wherein the circuit is configured to perform the method according to any one of claims 1 to 7.
